(19) Europäisches Patentamt
European Patent Office
Office européen des brevets

(11) Veröffentlichungsnummer: **0 073 736**
**A1**

# (12) EUROPÄISCHE PATENTANMELDUNG

(21) Anmeldenummer: **82810347.3**

(22) Anmeldetag: **23.08.82**

(51) Int. Cl.³: **H 01 B 3/40**, C 08 L 63/00

(30) Priorität: **27.08.81 CH 5522/81**

(43) Veröffentlichungstag der Anmeldung: **09.03.83**
**Patentblatt 83/10**

(84) Benannte Vertragsstaaten: **DE FR GB NL**

(71) Anmelder: **CIBA-GEIGY AG, Patentabteilung Postfach, CH-4002 Basel (CH)**

(72) Erfinder: **Baumann, Dieter, Habsburgerstrasse 74, CH-4310 Rheinfelden (CH)**
Erfinder: **Küng, Bernard, Lärchenweg 8, D-7867 Wehr (DE)**
Erfinder: **Rembold, Heinz, Dr., Hollenweg 39, CH-4144 Arlesheim (CH)**

## (54) Verfahren zur Herstellung von mit Kunststoff ummantelten druckempfindlichen Bauteilen.

(57) Mit einer flüssigen Giessharzmischung werden druckempfindliche Bauteile, wie Halbleiterbauelemente (Dioden, ICs) oder Ferritkerne, in einer Form umgossen. Die Giessharzmischung enthält ein niedermolekulares Epoxidharz, in ungefähr äquivalenten Mengen ein Carbonsäureanhydrid als Härter, einen Beschleuniger und gegebenenfalls anorganische Füllstoffe. Entweder das Epoxidharz oder der Beschleuniger oder beide basieren auf einem N-Heterocyclus. Nach der Härtung der Harzmischung durch Erwärmen sind die ummantelten Bauteile durch Spannungen nicht beeinträchtigt, da nur ein unbedeutender oder kein Reaktionsschwund in der festen Phase auftritt.

EP 0 073 736 A1

0073736

CIBA-GEIGY
Basel (Schweiz)

3-13528

# Verfahren zur Herstellung von mit Kunststoff ummantelten druckempfindlichen Bauteilen

Die Erfindung betrifft ein Verfahren zur Herstellung ummantelter druckempfindlicher Bauteile, wie z.B. Halbleiterbauteile oder Ferritkerne, unter Verwendung einer bei Raumtemperatur flüssigen Giessharzmischung auf Epoxidharzbasis, welche ein Carbonsäureanhydrid als Härter, einen Beschleuniger und gegebenenfalls anorganische Füllmittel enthält.

Bei der Härtung von flüssigen Epoxidharz/Härter-Systemen nimmt gewöhnlich das Volumen der härtenden Masse ab; es tritt bei zunehmender Dichte ein Volumenschwund ein. Die Schwunderscheinung setzt sich im bereits fest gewordenen Harz fort und führt z.B. in Giesskörpern zu Druckspannungen, welche die Verwendung solcher flüssiger Harz/Härter-Systeme zur Ummantelung oder Einbettung von nicht geschützten druckempfindlichen Bauteilen nicht erlauben.

Zur Beseitigung dieses Nachteils hat man bislang durch Vorvernetzung der Harzsysteme zusammen mit Füllstoffen Pulver oder Granulate hergestellt, bei welchen der Volumenschwund grösstenteils vor der Verwendung der Produkte eingetreten ist. Die vorvernetzten Produkte werden dann in Form von Niederdruckpressmassen im Transfer-Moulding-Verfahren verarbeitet und ausgehärtet, wobei dann noch eine Restschrumpfung folgt, welche meist in Kauf genommen werden kann. Hingegen weisen diese Pressmassen oft andere Nachteile auf, wie hohe Schmelzviskosität, mangelnde Lagerstabilität, schlechte Modifizierbarkeit, z.B. Einfärben, oder erschwerte Verarbeitbarkeit. Diese Nachteile können auch kombiniert auftreten. Flüssige Harze und Härter weisen diese Nachteile nicht auf.

Harz und Härter können getrennt voneinander stabil gelagert werden; Flüssigkeiten können besser transportiert und bequemer gehandhabt werden, und der Verarbeitungsprozess leichter automatisiert werden kann. Aus den besagten Gründen war es schon immer ein Bestreben möglichst flüssige und niederviskose Giessharzmischungen zur Ummantelung solcher Bauteile heranzuziehen. Alle diese Versuche mit sehr niederviskosen Epoxydharzen sind jedoch daran gescheitert, dass, bedingt durch die niederen Molekulargewichte und hohen Vernetzungsdichten der in solchen Gemischen partizipierenden Reaktionspartner, grundsätzlich für die beschriebene Anwendung ein zu hoher Reaktionsvolumenschwund in der festen Phase eintritt.

In der Zeitschrift "Chimia" 22, 226, 1968, beschreiben W. Fisch, W. Hofman und R. Schmid zwar Systeme, die mit zunehmendem Aushärtungsgrad und steigender Härtungstemperatur bei Raumtemperatur eine abnehmende Dichte aufweisen. Dieser Effekt zeigte sich jedoch unter Bedingungen, welche für eine praktische Anwendung nicht in Frage kommen: Mischungen werden bei 80°C während mindestens 50 Stunden vorvernetzt, bevor sie dann bei 160°C ausgehärtet werden. Beim Arbeiten unter praxisnahen Bedingungen, d.h. Vorvernetzung bei 80°C während höchstens 6 Stunden, tritt dieser Effekt nicht ein; vielmehr nimmt erwartungsgemäss die Dichte der Mischung zu.

In der japanischen Patentanmeldung Sho 49-34379 (Kokai Sho 50-127946) wird eine härtbare Harzzusammensetzung beschrieben, die beim Härten nur eine kleine Volumenschrumpfung zeigt. Als Harz kann ein Epoxidharz, als Härter ein Carbonsäureanhydrid verwendet werden. Ferner kann die Harzmischung auch einen Katalysator, z.B. 2-Methyl-imidazol, enthalten. In jedem Fall muss jedoch ein Harzgel als Füllmittel, mindestens in einer Menge von 5 Gewichtsprozent, vorhanden sein, da sonst keine Verringerung des Volumenschwunds eintritt.

Ein weiteres Verfahren zur Ummantelung druckempfindlicher Bauteile wird in der GB Patentschrift 1 528 203 beschrieben. Feste Mischungen aus Cresolnovolacharzen, Phthalsäureanhydrid, Imidazol und gegebenenfalls einem mineralischen Füllmittel werden pulverisiert und tablettiert. Die Tabletten werden in einem Metallgehäuse geschmolzen und mit Siliconharz geschützte Halbleiterbauelemente, in die Schmelze getaucht. Anschliessend erfolgt die Härtung der Mischung bei 80-120°C während 16 Stunden.

Es wurde nun gefunden, dass bestimmte flüssige Zusammensetzungen aus Epoxidharz, Härter und Beschleuniger Systeme zu bilden vermögen, welche ausser den Vorteilen, welche flüssige Systeme aufweisen, auch den Vorteil haben, ohne Schwunderscheinungen oder lediglich mit geringen, nicht störenden Schwunderscheinungen zu härten. Sie können daher für die Ummantelung druckempfindlicher Bauteile, ohne dass diese vorher, z.B. mit einem Siliconharz, geschützt werden müssen, nach dem Giessverfahren verwendet werden.

Das erfindungsgemässe Verfahren zur Herstellung von mit Kunststoff ummantelten druckempfindlichen Bauteilen durch Giessen einer bei Raumtemperatur flüssigen Giessharzmischung, welche

(a) ein Epoxidharz oder ein Epoxidharzgemisch mit im Durchschnitt mehr als einer Epoxidgruppe im Molekül, einem Molgewicht von unter 1000 und einer dynamischen Viskosität bei 80°C von unter 100 mPa s,

(b) ein Carbonsäureanhydrid oder Carbonsäureanhydridgemisch als Härter und

(c) einen Beschleuniger

enthält, in eine die zu ummantelnden Bauteile enthaltende Form und Härten des Giessharzes durch Erwärmen, ist dadurch gekennzeichnet, dass man eine Giessharzmischung verwendet, in welcher mindestens eine der Komponenten (a) und (c) aus einem N-Heterocyclus besteht und welche keine organischen Füllmittel enthält, und dass ein Reaktionsvolumenschwund in der festen Phase von höchstens 0,8% auftritt.

Mit fester Phase wird eine Masse bezeichnet, die eine dynamische Viskosität von mehr als 10 Pa s aufweist.

Die dynamischen Viskositäten werden nach der Methode von Hoeppler gemessen. Beispiele von druckempfindlichen Bauteilen sind Halbleiterbauelemente, wie Transistoren auf Basis von Silicium, Germanium oder Galliumarsenid, Dioden, z.B. Leuchtdioden, integrierte Schaltungen (ICs) und Thyristoren, ferner Ferrite (z.B. Transformatorenkerne) und piezolektrische Elemente.

Die Mischung weist vorzugsweise eine solche Reaktivität auf, dass bei 80°C eine dynamische Viskosität von mindestens 10 000 mPa s in maximal 6 Stunden erreicht wird.

Das Epoxidharz weist vorzugsweise ein Molgewicht zwischen 150 und 500 auf und hat bei 80°C vorzugsweise eine dynamische Viskosität zwischen 20 und 70 mPa s.

Vorzugsweise werden auf 1 Aequivalent eines Carbonsäureanhydrids 0,9 bis 1,2 Aequivalente eines Epoxidharzes oder Epoxidharzgemisches verwendet.

Auf 100 Gewichtsteile des Epoxidharzes oder Epoxidharzgemisches kommen vorzugsweise 0,5 bis 3 Gewichtsteile des Beschleunigers.

In der erfindungsgemäss verwendeten Mischung können anorganische Füllstoffe, ferner weitere übliche Zusätze, wie Pigmente, Stabilisatoren, Entformungsmittel, flammhemmende Mittel und Flexibilisatoren enthalten sein. Füllstoffe können in Mengen bis zu 80 Gewichtsprozent, bezogen auf die Gesamtmischung, vorhanden sein. Es handelt sich dabei beispielsweise um Quarzmehl, amorphen Quarz, Aluminiumoxid, Aluminiumoxidtrihydrat, Erdalkalicarbonate, wie Kalk, Dolomit, und Silikate.

Als Epoxidharze kommen vorzugsweise solche auf Basis von Glycidyläthern oder -estern sowie Epoxidgruppen aufweisenden Cycloaliphaten und N-Heterocyclen in Frage, ferner Mischungen solcher Harze.

Besonders bevorzugt sind cycloaliphatische Harze mit mindestens 2 Epoxidgruppen im Molekül, wie ein Harz der Formel I

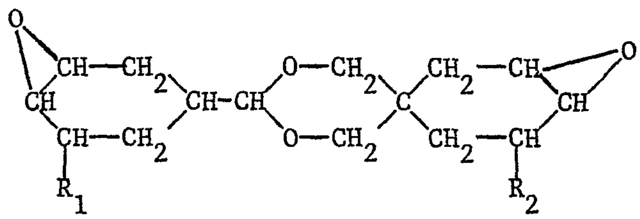

(I)

worin $R_1$ und $R_2$ für Wasserstoff oder Methyl stehen, oder ein Harz der Formel II

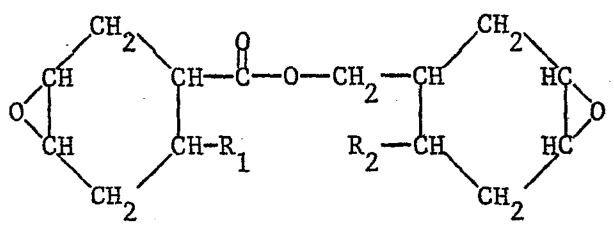

(II)

oder ein Harz der Formel III

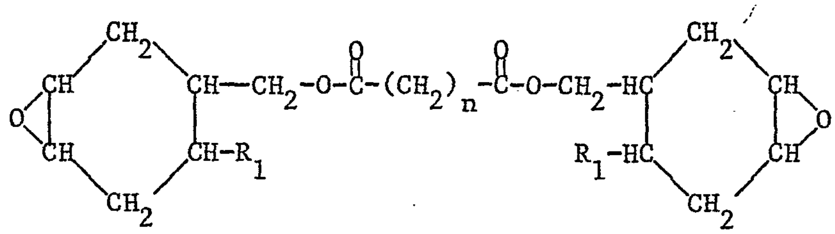

(III)

oder ein Harz der Formel IV

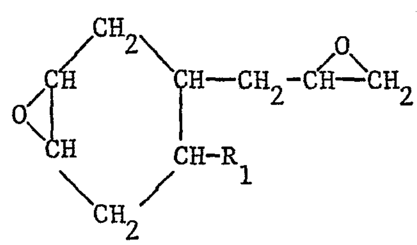

(IV)

oder ein Harz der Formel V

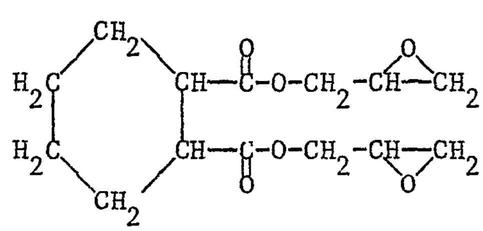

(V)

In allen Formeln haben $R_1$ und $R_2$ die oben genannten Bedeutungen.

Vorzugsweise verwendet man Mischungen verschiedener Epoxidharze, wie z.B. aus einem cycloaliphatischen Epoxidharz und einem solchen auf Bisphenol A-Basis, wobei alle Mengenverhältnisse möglich sind.

Als Härter für die Epoxidharze können Di- oder Tetracarbonsäureanhydrid verwendet werden, vorzugsweise alicyclische Dicarbonsäureanhydride, wie Hexahydrophthalsäureanhydrid, Tetrahydrophthalsäureanhydrid, Methylhexahydrophthalsäureanhydrid oder Methyltetrahydrophthalsäureanhydrid, auch alkylierte Endoalkylentetrahydrophthalsäureanhydrid, wie Methylendomethylentetrahydrophthalsäureanhydrid, ferner alkylierte (Alkylgruppen mit 1 bis 12 Kohlenstoffatomen) aliphatische Dicarbonsäureanhydride, und Gemische solcher Anhydride. Die Anhydride oder deren Gemische sollten unter 50°C flüssig sein.

Als Beschleuniger wird bei der Verwendung eines Epoxidharzes beliebiger Konstitution, sofern das Harz die genannten Bedingungen bezüglich des Molgewichts und der Viskosität erfüllt, ein solcher auf Basis eines N-Heterocyclus verwendet. Es handelt sich dabei vorzugsweise um Lewis-Basen, deren Nucleophilie so hoch ist, dass die Reaktion mit den elektrophilen Kohlenstoffatomen möglich ist. Derartige Verbindungen sind z.B. Imidazole, Pyridine, Pyridazine, Isochinoline, Choline, Chinazoline, Cinnoline, Acridine, $d^2$-Imidazoline, Thiazole und Thiazoline. Besonders bevorzugt sind 1- oder 2-Methyl-imidazol, 2-Aethyl-4-methyl-imidazol und 4-Dimethylamino-pyridin.

Falls ein Epoxidharz auf Basis eines N-Heterocyclus verwendet wird, kommt ausser den oben genannten Beschleunigern noch ein tertiäres Amin, wie N,N-Dimethylbenzylamin oder Tris-(dimethylamino)-phenol, in Betracht.

Bei der Durchführung des erfindungsgemässen Verfahrens kann das flüssige Giessharz bei Raumtemperatur oder erhöhter Temperatur, z.B.

bis zu 80°C, in die mit einem oder mehreren druckempfindlichen Bauteilen bestückte Form gegossen werden, wobei auch ein leichter Druck auf die Giessmasse ausgeübt werden kann. Die Form kann vorgeheizt sein, z.B. auf 100-200°C. Die Masse geliert gewöhnlich nach einigen Sekunden oder Minuten und kann dann entformt und ausserhalb der Form ausgehärtet werden, z.B. während 1/2 bis 6 Stunden bei 100 bis 200°C.

Damit der Reaktionsschwund in der festen Phase nicht störend wirkt, muss er kleiner als 0,8 % bezogen auf das Volumen, sein. Dieses Ziel wird beim Arbeiten nach dem erfindungsgemässen Verfahren erreicht.

Die beschriebenen vorzugsweisen Merkmale des erfindungsgemässen Verfahrens können selbstverständlich in beliebiger Weise kombiniert werden, soweit die Kombination noch ein technisch sinnvolles Verfahren erlaubt.

Beispiel 1: Bei Raumtemperatur werden die folgenden Bestandteile zusammengemischt:

100 Gew.T. eines Harzgemisches aus

70 Gew.T. eines flüssigen, unmodifizierten Epoxidharzes auf Bisphenol A-Basis mit einer dynamischen Viskosität von 12 mPa s bei 25°C (weniger als 100 mPa s bei 80°C), einem Molgewicht von 380 und einem Epoxidäquivalentgewicht von 5,26 und

30 Gew.T. des Harzes der Formel II, worin $R_1$ und $R_2$ Wasserstoff bedeuten, mit der Viskosität von 0,5 Pa s bei 25°C (weniger als 100 mPa s bei 80°C),

100 Gew.T. Methyltetrahydrophthalsäureanhydrid,

1,8 Gew.T. 1-Methyl-imidazol,

150 Gew.T. Quarzmehl,

50 Gew.T. kristalliner Quarz mit einer mittleren Korngrösse von 10 µm ("Novacite" $^R$) und

250 Gew.T. $Al_2O_3 \cdot 3\ H_2O$.

Die kalte Masse wird unter einem Druck von 2 bar in die mit Dioden bestückte, auf 160°C vorgeheizte Form gepresst. Die Masse geliert nach 35 Sekunden (Die Mischung ohne Füllstoff erreicht innert 55 Minuten bei 80°C eine dynamische Viskosität von 10 000 mPa s.). Nach 70 Sekunden wird sie entformt und bei 160°C während 4 Stunden ausgehärtet.

Der Reaktionsvolumenschwund in der festen Phase ist nahezu 0, d.h., es treten nach dem Gelieren des Harzes nur unbedeutende Schwunderscheinungen auf. Die mit vorgenannter Masse ummantelten Dioden sind gegen mechanische Einflüsse und Feuchtigkeit geschützt und zeichnen sich ferner durch sehr geringe Restströme aus.

Beispiel 2: Bei Raumtemperatur werden die folgenden Bestandteile vermischt

100 Gew.T. des im Beispiel 1 beschriebenen Harzgemisches,
80 Gew.T. Methyltetrahydrophthalsäureanhydrid,
20 Gew.T. Methylendomethylentetrahydrophthalsäureanhydrid,
1,8 Gew.T. 1-Methyl-imidazol,
230 Gew.T. $Al_2O_3 \cdot 3H_2O$ und
180 Gew.T. eines amorphen Quarzes.

Die kalte Masse wird unter einem Druck von 2 bar in die mit ICs (integrierten Schaltungen) bestückte Form, welche auf 180°C vorgeheizt worden ist, gepresst. Die Masse geliert nach 20 Sekunden. Nach 45 Sekunden werden die Bauteile entformt. Anschliessend wird das Harz während 4 Stunden bei 160°C ausgehärtet.

Schwunderscheinungen in der festen Phase sind nicht feststellbar. Die mit vorgenannter Masse ummantelten ICs sind gegen mechanische Einwirkungen und Feuchtigkeit geschützt. Sie zeichnen sich ferner durch sehr geringe Restströme und niedrige lineare Ausdehnungskoeffizienten aus.

Beispiel 3: Bei Raumtemperatur werden die folgenden Bestandteile gemischt:

100 Gew.T. des Harzes gemäss Formel II, worin $R_1$ und $R_2$ Wasserstoff bedeuten,

110 Gew.T. Methyltetrahydrophthalsäureanhydrid und

1,5 Gew.T. 2-Methyl-imidazol.

Die Masse wird in eine mit Dioden bestückte Form, welche auf 80°C erhitzt ist, eingegeben. Nach 1 1/2 Stunden geliert die Masse bei 80°C und wird bei 160°C während 6 Stunden ausgehärtet.

Es kann kein Reaktionsvolumenschwund in der festen Phase festgestellt werden.

In analoger Weise sind die folgenden Mischungen verwendbar (vgl. die Tabelle):

| Harz 100 Gew.T. | Härter Gew.T. | Beschleuniger 1,5 Gew.T. | Aushärtetemperatur °C | Reaktionsvolumenschwund in der festen Phase % |
|---|---|---|---|---|
| A | 110 | I | 160 | 0,75 |
| A | 110 | III | 160 | 0,1 |
| A | 110 | IV | 160 | 0,6 |
| B | 100 | II | 160 | 0,7 |
| C | 75 | II | 160 | 0,7 |
| D | 100 | V | 140 | 0,65 |
| D | 100 | I | 140 | 0,35 |
| E | 110 | V | 160 | 0,1 |
| F | 95 | I | 140 | 0,65 |

Harze: A: Formel II, worin $R_1$ und $R_2$ Wasserstoff bedeuten

B: Formel I, worin $R_1$ und $R_2$ Wasserstoff bedeuten

C: Formel III, worin $R_1$ Wasserstoff und n=4 bedeuten

D: Mischung aus 70 Gew.% N,N'-Diglycidyl-5,5-dimethyl-hydantoin
30 Gew.% N,N'-Di-(propyl-2-glycidyläther)-5,5-dimethyl-hydantoin

E: N,N'-Diglycidyl-5,5-dimethyl-hydantoin

F: Formel V.

Härter H: Methyltetrahydrophthalsäureanhydrid

Beschleuniger I : 1-Methyl-imidazol

II : 2-Methyl-imidazol

III: 2,4-Aethyl-methyl-imidazol

IV : 4-Dimethylamino-pyridin

V : N,N-Dimethyl-benzylamin

0073736

Patentansprüche

1. Verfahren zur Herstellung von mit Kunststoff ummantelten druckempfindlichen Bauteilen durch Giessen einer bei Raumtemperatur flüssigen Giessharzmischung, welche
a) ein Epoxidharz oder ein Epoxidharzgemisch mit im Durchschnitt mehr als einer Epoxidgruppe in Molekül, einem Molgewicht von unter 1000 und einer dynamischen Viskosität bei 80°C von unter 100 mPas,
b) ein Carbonsäureanhydrid oder ein Carbonsäureanhydridgemisch als Härter und
c) einen Beschleuniger
enthält, in eine die zu ummantelnden Bauteile enthaltende Form und Härten des Giessharzes durch Erwärmen, dadurch gekennzeichnet, dass man eine Giessharzmischung verwendet, in welcher mindestens eine der Komponenten a) und c) aus einem N-Heterocyclus besteht und welche keine organischen Füllmittel enthält, und dass ein Reaktionsvolumenschwund in der festen Phase von höchstens 0,8% auftritt.

2. Verfahren gemäss Anspruch 1, dadurch gekennzeichnet, dass als Beschleuniger eine Verbindung der folgenden Klassen verwendet wird: Imidazole, $d^2$-Imidazoline, Pyridine, Pyridazine, Choline, Isocholine, Chinazoline, Cinnoline, Acridine, Thiazole und Thiazoline.

3. Verfahren gemäss Anspruch 2, dadurch gekennzeichnet, dass als Epoxidharz ein solches auf Basis von Glycidyläthern, Glycidylestern, cycloaliphatischen oder heterocyclischen Epoxidverbindungen oder ein Gemisch solcher Harze verwendet wird.

4. Verfahren gemäss Anspruch 3, dadurch gekennzeichnet, dass ein cycloaliphatisches Epoxidharz mit mindestens 2 Epoxidgruppen verwendet wird.

5. Verfahren gemäss Anspruch 3, dadurch gekennzeichnet, dass man ein Gemisch aus einem cycloaliphatischen Epoxidharz und einem solchen auf Bisphenol A-Basis verwendet.

6. Verfahren gemäss Anspruch 4 oder 5, dadurch gekennzeichnet, dass ein Harz der Formel I

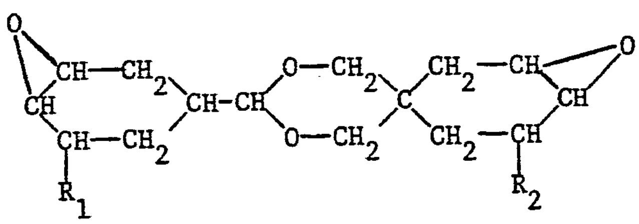

(I)

worin $R_1$ und $R_2$ für Wasserstoff oder Methyl stehen, verwendet wird.

7. Verfahren nach Anspruch 4 oder 5, dadurch gekennzeichnet, dass ein Harz der Formel II

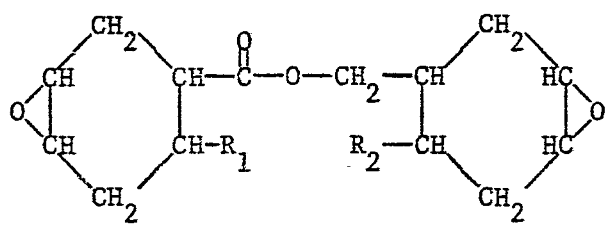

(II)

worin $R_1$ und $R_2$ Wasserstoff oder Methyl bedeuten, verwendet wird.

8. Verfahren nach Anspruch 4 oder 5, dadurch gekennzeichnet, dass ein Harz der Formel III

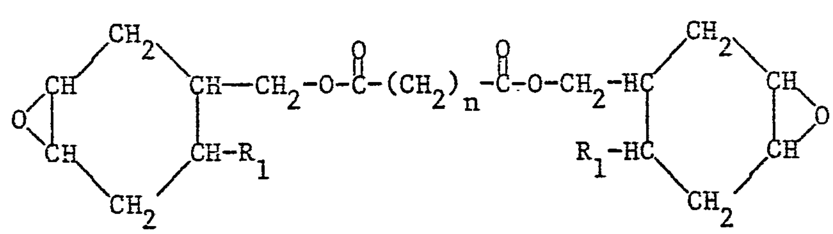

(III)

worin $R_1$ für Wasserstoff oder Methyl steht und n 2 bis 6 bedeutet, verwendet wird.

9. Verfahren nach Anspruch 4 oder 5 dadurch gekennzeichnet, dass ein Harz der Formel IV

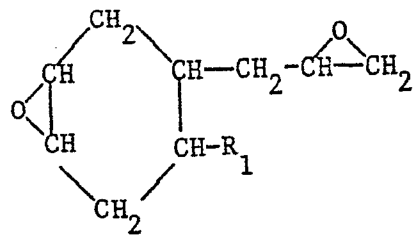

(IV)

worin $R_1$ für Wasserstoff oder Methyl steht, verwendet wird.

10. Verfahren gemäss Anspruch 3, dadurch gekennzeichnet, dass ein Harz der Formel V

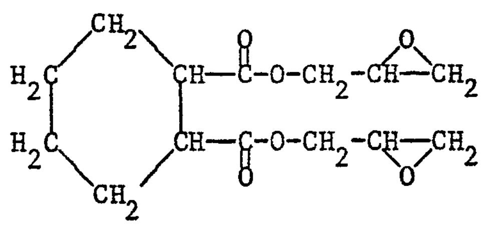

(V)

verwendet wird.

11. Verfahren gemäss Anspruch 1, dadurch gekennzeichnet, dass als Härter ein alicyclisches Dicarbonsäureanhydrid verwendet wird.

12. Verfahren gemäss Anspruch 11, dadurch gekennzeichnet, dass als Härter Hexahydrophthalsäureanhydrid, Tetrahydrophthalsäureanhydrid, Methylhexahydrophthalsäureanhydrid, Methyltetrahydrophthalsäureanhydrid oder ein alkyliertes Endoalkylentetrahydrophthalsäureanhydrid verwendet wird.

13. Verfahren gemäss Anspruch 2, dadurch gekennzeichnet, dass als Beschleuniger 1- oder 2-Methyl-imidazol verwendet wird.

14. Verfahren gemäss Anspruch 2, dadurch gekennzeichnet, dass als Beschleuniger 2-Aethyl-4-methyl-imidazol verwendet wird.

15. Verfahren gemäss Anspruch 2, dadurch gekennzeichnet, dass als Beschleuniger 4-Dimethylaminopyridin verwendet wird.

16. Verfahren gemäss Anspruch 1, dadurch gekennzeichnet, dass als Epoxidharz N,N'-Diglycidyl-5,5-dialkyl-hydantoin, insbesondere N,N'-Diglycidyl-5,5-dimethyl-hydantoin, und als Beschleuniger N,N-Dimethyl-benzylamin verwendet werden.

17. Verfahren gemäss Anspruch 1, dadurch gekennzeichnet, dass die Harzmischung 1 bis 80 Gew.%, bezogen auf die Gesamtmischung, eines anorganischen Füllmittels enthält.

18. Verfahren gemäss Anspruch 17, dadurch gekennzeichnet, dass als Füllmittel Quarzmehl, $Al_2O_3$, $Al_2O_3 \cdot 3H_2O$, Silikat, Erdalkalicarbonat oder amorpher Quarz vorhanden ist.

19. Verfahren gemäss Anspruch 1, dadurch gekennzeichnet, dass ein Halbleiterbauelement, wie Transistor, Diode, Ic oder Thyristor, ein Ferrit oder ein piezoelektrisches Element ummantelt wird.

20. Verfahren gemäss Anspruch 1, dadurch gekennzeichnet, dass die Aushärtung des Giessharzsystems während 1/2 bis 6 Stunden bei einer Temperatur von 80 bis 200°C erfolgt.

21. Verfahren gemäss Anspruch 1, dadurch gekennzeichnet, dass die Mischung eine solche Reaktivität aufweist, dass bei 80°C eine dynamische Viskosität von mindestens 10 000 mPa s innert maximal 6 Stunden erreicht wird.

BAD ORIGINAL

Europäisches Patentamt

**EUROPÄISCHER RECHERCHENBERICHT**

0073736 Nummer der Anmeldung

EP 82 81 0347

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-1 937 715 (CIBA)<br>* Seite 1, Zeile 1 - Seite 22, Zeile 12 * | 1-21 | H 01 B 3/40<br>C 08 L 63/00 |
| Y | FR-A-2 426 967 (WESTERN ELECTRIC)<br>* Seite 1, Zeile 21 - Seite 2, Zeile 5; Seite 3, Zeile 30 - Seite 11, Zeile 3; Ansprüche 1,8 * | 1-21 | |
| X | FR-A-2 371 753 (WESTINGHOUSE ELECTRIC)<br>* Seite 2, Zeile 11 - Seite 5, Zeile 11; Seite 6, Zeilen 19-22 * | 1-21 | |
| A | DE-A-2 424 616 (LICENTIA)<br>* Anspruch 1 * | 1 | RECHERCHIERTE SACHGEBIETE (Int. Cl. 3)<br>H 01 B |

Der vorliegende Recherchenbericht wurde für alle Patentansprüche erstellt.

| Recherchenort | Abschlußdatum der Recherche | Prüfer |
|---|---|---|
| DEN HAAG | 22-12-1982 | GOOVAERTS R.E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82